# EUROPEAN PATENT APPLICATION

(11) **EP 4 542 175 A1**
(43) Date of publication of application: **23.04.2025**
(21) Application number: 23824223.4
(22) Date of filing: 14.06.2023
(51) Int. Cl.: G01D 5/14, G01L 3/10, G01B 7/30, B62D 15/02

(54) **SENSOR DEVICE**

(30) Priority: 14.06.2022 KR 20220072143
(71) Applicant: LG INNOTEK CO. LTD, Gangseo-gu Seoul 07796 (KR)
(72) Inventor: BYUN, Sung Wook, Seoul 07796 (KR)
(74) Representative: DREISS Patentanwälte PartG mbB
(86) International application number: PCT/KR2023/008188
(87) International publication number: WO 2023/244009

(57) **Abstract**

An embodiment may provide a sensor device including a rotor, a stator disposed to correspond to the rotor, first and second outer collectors disposed at one side of the stator, first and second inner collectors disposed between the first and second outer collectors, and a Hall sensor disposed between the first inner collector and the second inner collector.

## Description

### [Technical Field]

Embodiments relate to a sensor device.

### [Background Art]

A power steering system (electronic power system (hereinafter, referred to as an 'EPS')) ensures turning stability and provides a quick restoring force by allowing an electronic control unit to operate a motor in accordance with a driving condition, thereby allowing a driver to perform safe driving.

The EPS includes a sensor device configured to measure torque, a steering angle, and the like of a steering shaft in order to provide appropriate torque. The sensor device is a device that measures a degree of torsion of a torsion bar. The steering shaft includes an input shaft connected to a steering wheel, and an output shaft connected to a wheel side power transmission configuration, and the torsion bar is a member configured to connect the and input shaft and the output shaft.

The sensor device includes a housing, a rotor, a stator including stator teeth, and a collector. In this case, the collector is disposed outside the stator teeth. For this reason, the collector serves as a passageway for an external magnetic field when the external magnetic field is formed, which causes a problem in that the collector affects a magnetic flux value of a sensor. When the sensor is affected by the collector, an output value of the sensor device changes, which causes a problem in that a degree of torsion of the torsion bar cannot be accurately measured.

### [Disclosure]

### [Technical Problem]

An object of an embodiment is to provide a sensor device capable of compensating for the amount of change in output value of a sensor caused by external magnetism.

### [Technical Solution]

An embodiment may provide a sensor device including a rotor, a stator disposed to correspond to the rotor, first and second outer collectors disposed at one side of the stator, first and second inner collectors disposed between the first and second outer collectors, and a Hall sensor disposed between the first inner collector and the second inner collector.

The first outer collector may include: a first region positioned at a first side of the stator in an axial direction; a second region positioned at a second side of the stator; and a third region configured to connect the first region and the second region, and the second outer collector may include: a fourth region positioned at the second side of the stator in the axial direction; a fifth region positioned at the first side of the stator; and a sixth region configured to connect the fourth region and the fifth region.

The first inner collector and the second inner collector may be disposed between the second region and the fifth region.

The first outer collector and the first inner collector may be disposed to be spaced apart from each other, and the second outer collector and the second inner collector may be disposed to be spaced apart from each other.

The second region, the fifth region, the first inner collector, and the second inner collector may overlap one another in the axial direction.

The second region may include a first bent portion bent toward the first side, and the first bent portion may be disposed to overlap the first inner collector in the direction perpendicular to the axial direction.

The first bent portion may be disposed to overlap the Hall sensor in the direction perpendicular to the axial direction.

The first region and the second region may be disposed on planes perpendicular to the axial direction, and the third region may be disposed perpendicularly to the first region and the second region.

The fourth region and the fifth region may be disposed on planes perpendicular to the axial direction, and the sixth region may be disposed perpendicularly to the fourth region and the fifth region.

The second region may include an inner surface and an outer surface, the inner surface may include a curved surface, and the outer surface may include a protruding portion protruding outward in the direction perpendicular to the axial direction.

The fourth region may include an inner surface and an outer surface, the inner surface may include a curved surface, and the outer surface may include a second protruding portion protruding outward in a direction perpendicular to an axial center.

The first inner collector may include a seventh region disposed to correspond to the second region, an eighth region bent from the seventh region toward the first side, and a ninth region bent from the eighth region in the direction perpendicular to the axial direction.

The second inner collector may include a tenth region disposed to correspond to the fifth region, an eleventh region bent from the fifth region toward the second side, and a twelfth region bent from the eleventh region in the direction perpendicular to the axial direction.

An embodiment may provide a sensor device including: a rotor; a stator disposed to correspond to the rotor; a first outer collector disposed at one side of the stator and configured to acquire a magnetic field from the stator; a first inner collector disposed to be spaced apart from the first outer collector and configured to acquire a magnetic field from the first outer collector; and a first Hall sensor unit disposed to acquire a magnetic field from the first inner collector.

The first outer collector may be disposed to be spaced apart from the stator, and the first inner collector may be disposed to be spaced apart from the first outer collector.

The magnetic field acquired from the stator may be transmitted to the first Hall sensor unit through the first outer collector and the first inner collector, and an external magnetic field in an axial direction may be collected at one side of the first outer collector based on the axial direction and discharged to the other side of the first outer collector.

The first outer collector may include: a first region positioned at a first side of the stator in the axial direction; a second region positioned at a second side of the stator; and a third region configured to connect the first region and the second region, and the external magnetic field in the axial direction may be collected in the first region and discharged to the outside of the third region through the second region.

An external magnetic field in a direction perpendicular to an axial direction may be collected at one side of the first outer collector based on the direction perpendicular to the axial direction and discharged to the other side of the first outer collector.

The first outer collector may include a first region positioned at a first side of the stator in the axial direction, a second region positioned at a second side of the stator, and a third region configured to connect the first region and the second region, the second region may include a first bent portion bent toward the second side, and an external magnetic field in a direction perpendicular to the axial direction may be collected in the first bent portion.

The sensor device may further include a second outer collector disposed at the other side of the stator and configured to acquire a magnetic field from the stator, a second inner collector disposed to be spaced apart from the second outer collector and configured to acquire a magnetic field from the second outer collector, and a second Hall sensor unit disposed to acquire a magnetic field from the first inner collector and the second inner collector.

The second outer collector may be disposed to be spaced apart from the stator, and the second inner collector may be disposed to be spaced apart from the second outer collector.

The magnetic field acquired from the stator may be transmitted to the first Hall sensor unit and the second Hall sensor unit through the second outer collector and the second inner collector, and an external magnetic field in an axial direction may be collected at one side of the second outer collector and discharged to the other side of the second outer collector.

The second outer collector may include a fourth region positioned at the second side of the stator in the axial direction, a fifth region positioned at the first side of the stator, and a sixth region configured to connect the fourth region and the fifth region, and the external magnetic field in the axial direction may be collected in the sixth region and discharged to the outside of the fourth region through the fifth region.

The external magnetic field in the direction perpendicular to the axial direction may be collected at one side of the second outer collector in the direction perpendicular to the axial direction and discharged to the other side of the second outer collector.

The second outer collector may include a fourth region positioned at the second side of the stator in the axial direction, a fifth region positioned at the second side of the stator, and a sixth region configured to connect the fourth region and the fifth region, the fifth region may include a second bent portion bent toward the second side, and the external magnetic field in the direction perpendicular to the axial direction may be collected in the second bent portion.

### [Advantageous Effects]

According to the embodiment, the outer collector serves as a shield against an external magnetic field, thereby reducing an influence of the external magnetic field on the Hall sensor.

According to the embodiment, it is possible to prevent an external magnetic field, which is applied in the axial direction, and an external magnetic field, which is applied in the direction perpendicular to the axial direction, from affecting the Hall sensor.

According to the embodiment, the outer collector and the inner collector are separated, such that an external magnetic field may flow more effectively.

According to the embodiment, the outer collector and the inner collector are separated, such that the outer collector and the inner collector are easily assembled.

### [Description of Drawings]

FIG. 1 is a perspective view illustrating a sensor device according to an embodiment.
FIG. 2 is a view illustrating a rotor, a stator, and collectors of the sensor device illustrated in FIG. 1.
FIG. 3 is a perspective view illustrating a first outer collector and a second outer collector.
FIG. 4 is a perspective view illustrating the first outer collector.
FIG. 5 is a top plan view of the first outer collector.
FIG. 6 is a perspective view illustrating the second outer collector.
FIG. 7 is a top plan view of the second outer collector.
FIG. 8 is a perspective view illustrating the first outer collector and a first inner collector.
FIG. 9 is a perspective view illustrating the second outer collector and a second inner collector.
FIG. 10 is a view illustrating a flow of magnetism generated by the rotor and the stator.
FIG. 11 is a view illustrating a flow of an external magnetic field applied in an axial direction.
FIG. 12 is a view illustrating a flow of an external magnetic field applied in a direction perpendicular to the axial direction.
FIG. 13 is a view illustrating a state in which the first inner collector and the second inner collector are mounted on a housing.
FIG. 14 is a view illustrating a state in which the first outer collector and the second outer collector are mounted on the housing.
FIG. 15 is a view illustrating a state in which the first outer collector and the second outer collector are completely mounted on the housing.

### [Mode for Invention]

Hereinafter, a direction perpendicular to an axial direction of a sensor device is referred to as a radial direction, and a direction in which a circle having a radius in the radial direction is defined about an axial center is referred to as a circumferential direction.

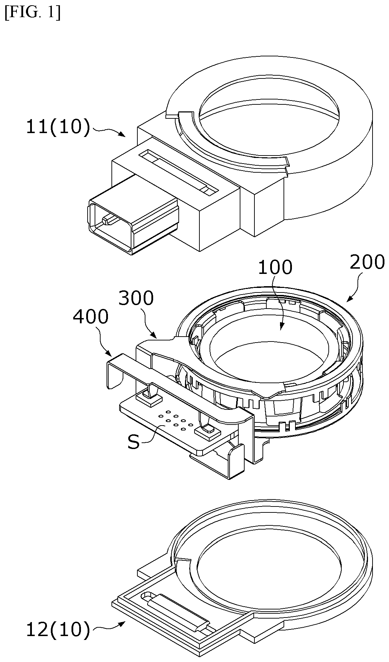

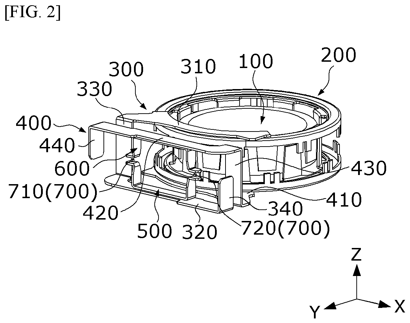

FIG. 1 is a perspective view illustrating a sensor device according to an embodiment, and FIG. 2 is a view illustrating a rotor 100, a stator 200, and collectors of the sensor device illustrated in FIG. 1.

With reference to FIGS. 1 and 2, the sensor device according to the embodiment may include the rotor 100, the stator 200, a first outer collector 300, a second outer collector 400, a first inner collector 500, a second inner collector 600, and a Hall sensor 700. In the drawings, an x-axis indicates a direction perpendicular to the axial direction, a y-axis indicates a direction perpendicular to the direction indicated by the x-axis and perpendicular to the axial direction, and a z-axis is the axial direction.

In this case, the stator 200 may be connected to an output shaft (not illustrated), and the rotor 100, which has at least a part rotatably disposed on the stator 200, may be connected to an input shaft (not illustrated). However, the present disclosure is not necessarily limited thereto. In this case, the rotor 100 may be disposed to be rotatable relative to the stator 200. Hereinafter, the term 'inside' may mean a direction disposed toward the center based on the radial direction, and the term 'outside' may mean a direction opposite to the inside.

The rotor 100 may include magnets. The magnet may be disposed inside the stator 200. The magnet may be connected to the input shaft through a separate holder.

A housing 10 is disposed outside the stator 200. The housing 10 may include an upper housing 11 and a lower housing 12. The stator 200, the first outer collector 300, the second outer collector 400, the first inner collector 500, and the second inner collector 600 may be fixed to the housing 10.

The first outer collector 300 may be disposed in the axial direction from a first side toward a second side of the stator 200. The second outer collector 400 may be disposed in the axial direction from the second side toward the first side of the stator 200. The first side refers to one side of the stator 200 based on the axial direction, and the second side refers to the other side of the stator 200 based on the axial direction.

The first inner collector 500 and the second inner collector 600 are disposed to correspond to the Hall sensor 700.

The Hall sensor 700 may include a first Hall sensor unit 710 and a second Hall sensor unit 720.

The first Hall sensor unit 710 and the second Hall sensor unit 720 are disposed between the first inner collector 500 and the second inner collector 600 and detect a change in magnetic field generated between the stator 200 and the rotor 100. The first Hall sensor unit 710 and the second Hall sensor unit 720 may each be a Hall IC. The sensor device measures torque on the basis of the detected change in the magnetic field.

The first outer collector 300 and the second outer collector 400 may be identical in shape and size and different in positions. The first inner collector 500 and the second inner collector 600 may also be identical in shape and size and different in positions.

The first inner collector 500 and the second inner collector 600 are positioned between the first outer collector 300 and the second outer collector 400 in the axial direction. Therefore, the first inner collector 500 and the second inner collector 600 are relatively less affected by the external magnetic field, which is applied in the axial direction, than the first outer collector 300 and the second outer collector 400.

The first inner collector 500 may be disposed to be spaced apart from the first outer collector in the axial direction. Further, the second inner collector 600 may be disposed to be spaced apart from the second outer collector in the axial direction.

The first outer collector 300 or the second outer collector 400 guides a flow of the magnetic field, which is generated between the rotor 100 and the stator 200, to the first inner collector 500 or the second inner collector 600. In addition, the first outer collector 300 or the second outer collector 400 serves to guide the flow of the external magnetic field so that the external magnetic field is discharged to the outside without flowing to the Hall sensor 700.

The first inner collector 500 and the second inner collector 600 serve to transmit the magnetic flow, which is generated between the rotor 100 and the stator 200, to the Hall sensor 700.

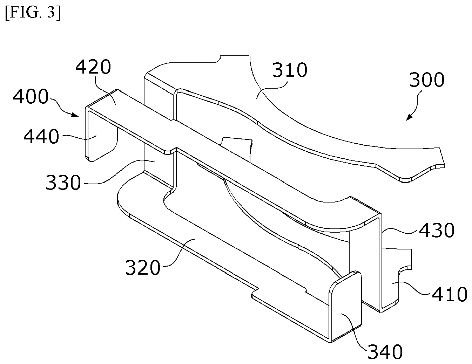

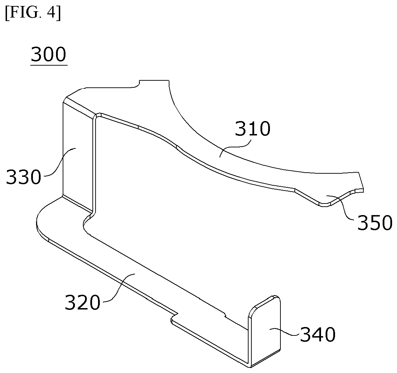

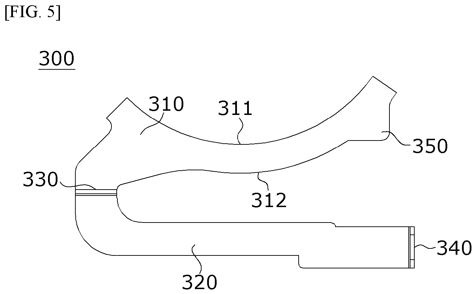

FIG. 3 is a perspective view illustrating the first outer collector 300 and the second outer collector 400, FIG. 4 is a perspective view illustrating the first outer collector 300, and FIG. 5 is a top plan view of the first outer collector 300.

With reference to FIGS. 3 and 4, the first outer collector 300 includes a first region 310, a second region 320, a third region 330, and a first bent portion 340.

The first region 310 is positioned at the first side of the stator 200. The first region 310 is disposed to overlap the stator 200 in the axial direction. The second region 320 is positioned at the second side of the stator 200. The stator 200 may be disposed between the first region 310 and the second region 320 in the axial direction.

The second region 320 is disposed to overlap the stator 200 in the axial direction. The third region 330 connects the first region 310 and the second region 320. The first bent portion 340 is bent from an end of the second region 320 toward the first side.

The first region 310, the second region 320, the third region 330, and the first bent portion 340 have been described as being distinguished depending on functions, positions, and shapes thereof. However, the first region 310, the second region 320, the third region 330, and the first bent portion 340 may be connected to one another to define a single member.

The first region 310 may be disposed on a plane perpendicular to the axial direction. The first region 310 may include an inner surface 311, an outer surface 312, and a first protruding portion 350. The inner surface 311 includes a curved surface. A center of curvature of the inner surface 311 may be consistent with an axial center of the sensor device. The outer surface 312 may also include a curved surface. The first protruding portion 350 protrudes outward in the direction perpendicular to the axial direction.

The second region 320 may be disposed on a plane perpendicular to the axial direction. The second region 320 is disposed to be spaced apart from the first region 310 in the axial direction.

The first region 310 and the second region 320 are disposed so as not to overlap each other when viewed in the axial direction. The first region 310 is disposed to overlap the stator 200, but the second region 320 is disposed so as not to overlap the stator 200. The second region 320 is positioned outward of the first region 310 in the radial direction.

The third region 330 connects one end of the first region 310 and one end of the second region 320.

The first bent portion 340 is bent from the other end of the second region 320 so as to be directed toward the first side of the stator 200.

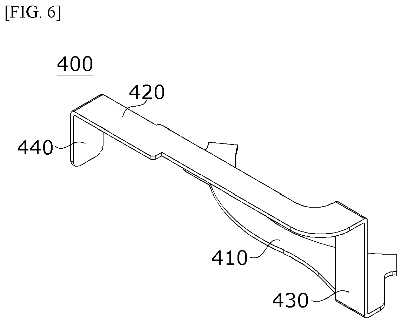

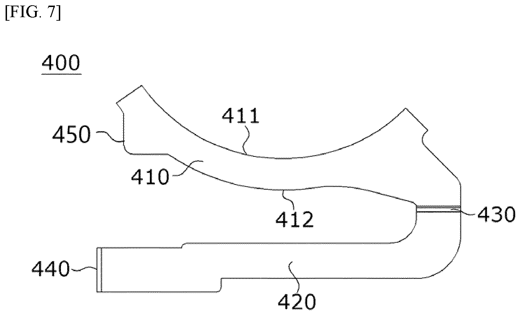

FIG. 6 is a perspective view illustrating the second outer collector 400, and FIG. 7 is a top plan view of the second outer collector 400.

With reference to FIGS. 6 and 7, the second outer collector 400 includes a fourth region 410, a fifth region 420, a sixth region 430, and a second bent portion 440.

The fourth region 410 is positioned at the second side of the stator 200. The fourth region 410 is disposed to overlap the stator 200 in the axial direction. The fourth region 410 is positioned at the second side of the stator 200. The stator 200 may be disposed between the fourth region 410 and the fifth region 420 in the axial direction.

The fifth region 420 is disposed so as not to overlap the stator 200 in the axial direction. The sixth region 430 connects the fourth region 410 and the fifth region 420. The second bent portion 440 is bent from an end of the fifth region 420 toward the second side.

The fourth region 410, the fifth region 420, the sixth region 430, and the second bent portion 440 have been described as being distinguished depending on functions, positions, and shapes thereof. However, the fourth region 410, the fifth region 420, the sixth region 430, and the second bent portion 440 may be connected to one another to define a single member.

The fourth region 410 may be disposed on a plane perpendicular to the axial direction. The fourth region 410 may include an inner surface 411, an outer surface 412, and a second protruding portion 450. The inner surface 411 includes a curved surface. A center of curvature of the inner surface 411 may be consistent with an axial center of the sensor device. The outer surface 412 may also include a curved surface. The second protruding portion 450 protrudes outward in the direction perpendicular to the axial direction.

The fifth region 420 may be disposed on a plane perpendicular to the axial direction. The fifth region 420 is disposed to be spaced apart from the fifth region 410 in the axial direction.

The fourth region 410 and the fifth region 420 may be disposed so as not to overlap one another when viewed in the axial direction. The fourth region 410 is disposed to overlap the stator 200, and the fifth region 420 is disposed so as not to overlap the stator 200. The fifth region 420 is positioned outward of the fourth region 410 in the radial direction.

The sixth region 430 connects one end of the fourth region 410 and one end of the fifth region 420.

The second bent portion 440 is bent from the other end of the fifth region 420 so as to be directed toward the second side of the stator 200.

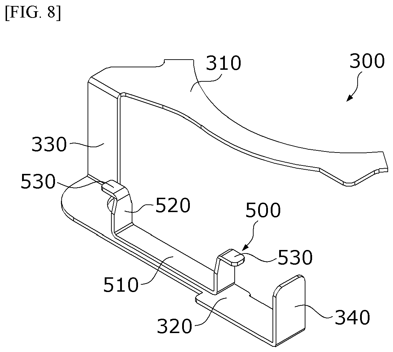

FIG. 8 is a perspective view illustrating the first outer collector 300 and the first inner collector 500.

With reference to FIG. 8, the first inner collector 500 may include a seventh region 510, eighth regions 520, and ninth regions 530.

The seventh region 510 is disposed on a plane perpendicular to the axial direction. The seventh region 510 is disposed to correspond to the second region 320. The seventh region 510 is disposed to overlap the second region 320 in the axial direction. The seventh region 510 may be disposed to be spaced apart from the second region 320 in the axial direction.

The eighth regions 520 are bent from two opposite ends of the seventh region 510 toward the first side. The eighth region 520 may be disposed perpendicularly to the seventh region 510. The ninth region 530 is bent from the eighth region 520 in the direction perpendicular to the axial direction. The ninth region 530 is disposed on a plane perpendicular to the axial direction. The ninth region 530 is disposed to face the Hall sensor 700.

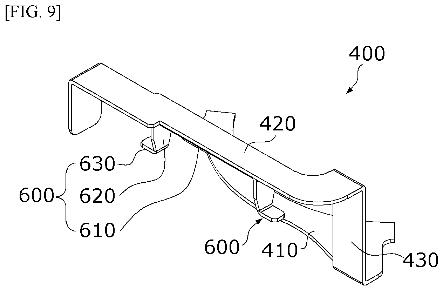

FIG. 9 is a perspective view illustrating the second outer collector 400 and the second inner collector 600.

With reference to FIG. 9, the second inner collector 600 may include a tenth region 610, eleventh regions 620, and twelfth regions 630.

The tenth region 610 is disposed on a plane perpendicular to the axial direction. The tenth region 610 is disposed to correspond to the fourth region 410. The tenth region 610 is disposed to overlap the fourth region 410 in the axial direction. The tenth region 610 may be disposed to be spaced apart from the fourth region 410 in the axial direction.

The eleventh region 620 is bent from the tenth region 610 toward the second side. The eleventh region 620 may be disposed perpendicularly to the tenth region 610. The eleventh region 620 is bent from the tenth region 610 in the direction perpendicular to the axial direction. The twelfth region 630 is disposed on a plane perpendicular to the axial direction. The twelfth region 630 is disposed to face the Hall sensor 700.

The first inner collector 500 and the second inner collector 600 may be disposed between the second region 320 and the fifth region 420 in the axial direction. Further, the second region 320, the fifth region 420, the first inner collector 500, and the second inner collector 600 may be disposed to overlap one another in the axial direction.

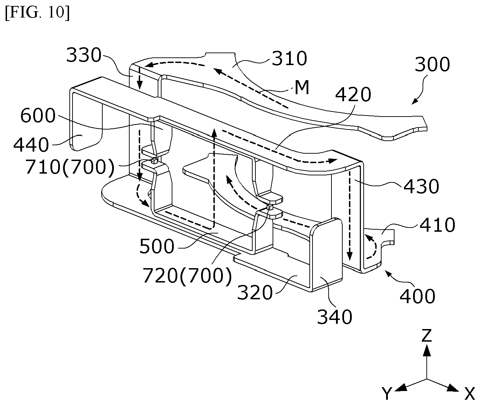

FIG. 10 is a view illustrating a magnetic field M formed by the rotor and the stator 200.

With reference to FIG. 10, the magnetic field M formed by the rotor and the stator 200 flows through the first outer collector 300 and the first inner collector 500 toward the second outer collector 400. Specifically, the magnetic field M formed by the rotor 100 and the stator 200 is collected in the first region 310 and flows through the third region 330 to the second region 320. The magnetic field M of the second region 320 flows to the first inner collector 500. A part of the magnetic field M of the first inner collector 500 flows to the Hall sensor 700, and another part of the magnetic field M is collected in the fifth region 420 of the second outer collector 400. The magnetic field M of the fifth region 420 flows through the sixth region 430 to the fourth region 410, and the magnetic field M flowing to the fourth region 410 flows to the stator 200.

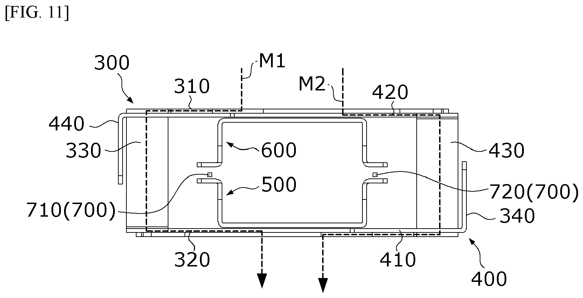

FIG. 11 is a view illustrating flows of external magnetic fields M1 and M2 applied in the axial direction.

With reference to FIG. 11, the external magnetic field M1 applied in the axial direction may be discharged to the outside through the first outer collector 300. Specifically, the external magnetic field M1 applied in the axial direction is collected in the first region 310 of the first outer collector 300. The external magnetic field M1 collected in the first region 310 flows through the third region 330 to the second region 320, and the external magnetic field M1 of the second region 320 is discharged to the outside.

In addition, the external magnetic field M2 applied in the axial direction may be discharged to the outside through the second outer collector 400. Specifically, the external magnetic field M2 applied in the axial direction is collected in the fourth region 410 of the second outer collector 400. The external magnetic field M2 collected in the fourth region 410 flows through the sixth region 430 to the fifth region 420, and the external magnetic field M2 of the fifth region 420 is discharged to the outside.

As described above, the external magnetic fields M1 and M2 applied in the axial direction of the sensor device are discharged to the outside through the first outer collector 300 or the second outer collector 400 without affecting the Hall sensor 700, such that the change in sensing values caused by the external magnetic fields M1 and M2 may be minimized.

Meanwhile, the first bent portion 340 may be disposed to overlap the Hall sensor 700 in the direction perpendicular to the axial direction. Further, the first bent portion 340 may be disposed to overlap the first inner collector 500 in the direction perpendicular to the axial direction.

The second bent portion 440 may also be disposed to overlap the Hall sensor 700 in the direction perpendicular to the axial direction. Further, the second bent portion 440 may be disposed to overlap the second inner collector 600 in the direction perpendicular to the axial direction.

This is to allow the first bent portion 340 or the second bent portion 440 to collect the external magnetic field applied in the direction perpendicular to the axial direction, thereby preventing the external magnetic field from affecting the Hall sensor 700.

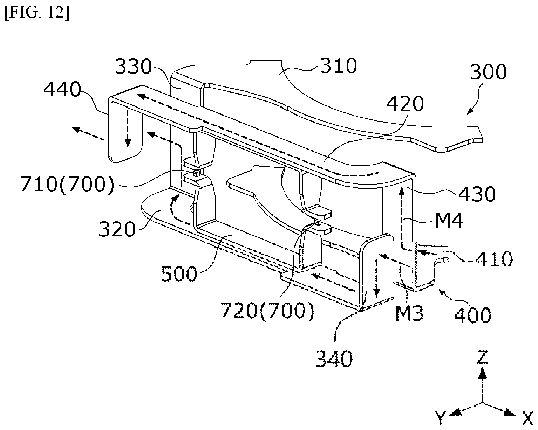

FIG. 12 is a view illustrating flows of external magnetic fields M3 and M4 applied in the direction perpendicular to the axial direction.

With reference to FIG. 12, the external magnetic field M3 applied in the direction perpendicular to the axial direction may also be discharged to the outside through the first outer collector 300. Specifically, the external magnetic field M3 applied in the direction perpendicular to the axial direction is collected in the first bent portion 340 of the first outer collector 300. The external magnetic field M3 collected in the first bent portion 340 flows through the second region 320 to the third region 330, and the external magnetic field M3 of the third region 330 is discharged to the outside in an intact manner.

In addition, the external magnetic field M4 applied in the axial direction may be discharged to the outside through the second outer collector 400. Specifically, the external magnetic field M4 applied in the axial direction is collected in the sixth region 430 of the second outer collector 400. The external magnetic field collected in the sixth region 430 flows through the sixth region 430 to the fifth region 420, and the external magnetic field M3 of the fifth region 420 flows to the second bent portion 440. The external magnetic field M3 of the second bent portion 440 is discharged to the outside.

As described above, the external magnetic fields M3 and M4 applied in the direction perpendicular to the axial direction of the sensor device are discharged to the outside through the first outer collector 300 or the second outer collector 400 without affecting the Hall sensor 700, such that the change in sensing values caused by the external magnetic fields may be minimized.

Table 1 below shows the comparison between an offset of a sensing value according to an external magnetic field in a sensor device of a comparative example and an offset of a sensing value according to an external magnetic field in a sensor device according to an example.

In this case, the comparative example is a sensor device including collectors distinguished and disposed at the first side and the second side of the stator 200, i.e., the sensor device including a collector integrated with a leg directed toward the Hall sensor 700.

As shown in Table 1, it can be ascertained that in the case of the external magnetic fields applied in the directions (the first direction (x) and the second direction (y)) perpendicular to the axial direction, the offset of the sensing value of the comparative example and the offset of the sensing value of the embodiment are almost equal to each other. However, it can be ascertained that in the case of the external magnetic field applied in the axial direction, the offset of the sensor device according to the example is as very low as 1/10 of the offset of the sensing value of the comparative example, the influence of the external magnetic field applied in the axial direction is relatively smaller in the example than in the comparative example.

**<Table 1>**

| | | Comparative Example | Example |
|---|---|---|---|
| Offset (deg) of sensing value corresponding to external magnetic field | First direction (x) | 0.00 deg | 0.00 deg |
| | Second direction (y) | 0.02 deg | 0.02 deg |
| | Axial direction (z) | 0.40 deg | 0.04 deg |

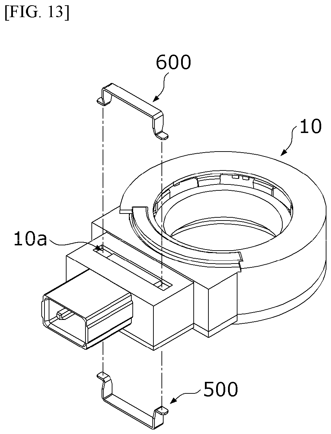

FIG. 13 is a view illustrating a state in which the first inner collector 500 and the second inner collector 600 are mounted on the housing 10.

With reference to FIG. 13, the first inner collector 500 and the second inner collector 600 may be configured separately from the first outer collector 300 and the second outer collector 400 and easily assembled.

During a process of assembling the sensor device, the first inner collector 500 and the second inner collector 600 may be assembled to the housing 10 before the first outer collector 300 and the second outer collector 400 are assembled. The housing 10 may include a hole 10a into which the first inner collector 500 or the second inner collector 600 is inserted. The first inner collector 500 may be assembled toward the first side of the stator 200, and the second inner collector 600 may be assembled toward the second side of the stator 200.

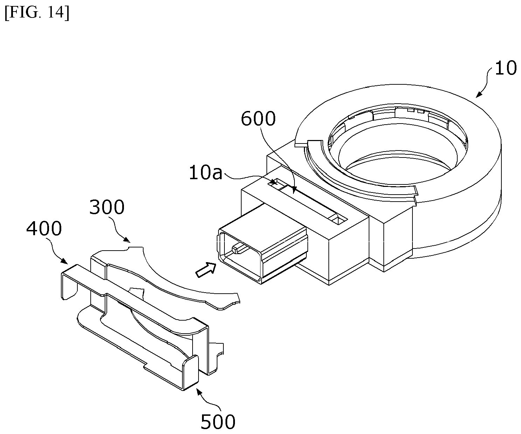

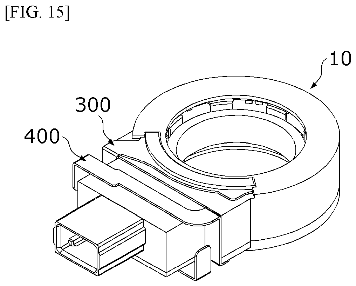

FIG. 14 is a view illustrating a state in which the first outer collector 300 and the second outer collector 400 are mounted on the housing 10, and FIG. 15 is a view illustrating a state in which the first outer collector 300 and the second outer collector 400 are mounted on the housing 10.

With reference to FIGS. 14 and 15, the first outer collector 300 and the second outer collector 400 may be assembled to the housing 10 in the state in which the first inner collector 500 and the second inner collector 600 are assembled to the housing 10. The first outer collector 300 may be inserted into the housing 10 in the direction perpendicular to the axial direction so that the first outer collector 300 is aligned with the first inner collector 500. The second outer collector 400 may also be inserted into the housing 10 in the direction perpendicular to the axial direction so that the second outer collector 400 is aligned with the second inner collector 600.

As described above, because the first outer collector 300 and the second outer collector 400 are separated from the first inner collector 500 and the second inner collector 600 and assembled to the first inner collector 500 and the second inner collector 600, the assembling process is simplified.

The above-mentioned embodiment may be used for various devices for vehicles or household appliances.

## Claims

1. A sensor device comprising:
a rotor;
a stator disposed to correspond to the rotor;
first and second outer collectors disposed at one side of the stator;
first and second inner collectors disposed between the first and second outer collectors; and
a Hall sensor disposed between the first inner collector and the second inner collector.

2. The sensor device of claim 1, wherein the first outer collector comprises:
a first region positioned at a first side of the stator in an axial direction;
a second region positioned at a second side of the stator; and
a third region configured to connect the first region and the second region, and
wherein the second outer collector comprises:
a fourth region positioned at the second side of the stator in the axial direction;
a fifth region positioned at the first side of the stator; and
a sixth region configured to connect the fourth region and the fifth region.

3. The sensor device of claim 2, wherein the first inner collector and the second inner collector are disposed between the second region and the fifth region.

4. The sensor device of claim 1, wherein the first outer collector and the first inner collector are disposed to be spaced apart from each other, and the second outer collector and the second inner collector are disposed to be spaced apart from each other.

5. The sensor device of claim 2, wherein the second region, the fifth region, the first inner collector, and the second inner collector overlap one another in the axial direction.

6. A sensor device comprising:
a rotor;
a stator disposed to correspond to the rotor;
a first outer collector disposed at one side of the stator and configured to acquire a magnetic field from the stator;
a first inner collector disposed to be spaced apart from the first outer collector and configured to acquire a magnetic field from the first outer collector; and
a first Hall sensor unit disposed to acquire a magnetic field from the first inner collector.

7. The sensor device of claim 6, wherein the first outer collector is disposed to be spaced apart from the stator, and the first inner collector is disposed to be spaced apart from the first outer collector.

8. The sensor device of claim 6, wherein the magnetic field acquired from the stator is transmitted to the first Hall sensor unit through the first outer collector and the first inner collector, and
wherein an external magnetic field in an axial direction is collected at one side of the first outer collector based on the axial direction and discharged to the other side of the first outer collector.

9. The sensor device of claim 8, wherein the first outer collector comprises:
a first region positioned at a first side of the stator in the axial direction;
a second region positioned at a second side of the stator; and
a third region configured to connect the first region and the second region, and
wherein the external magnetic field in the axial direction is collected in the first region and discharged to the outside of the third region through the second region.

10. The sensor device of claim 6, wherein an external magnetic field in a direction perpendicular to an axial direction is collected at one side of the first outer collector based on the direction perpendicular to the axial direction and discharged to the other side of the first outer collector.
